# EUROPEAN PATENT SPECIFICATION

(11) **EP 2 941 599 B1**
(45) Date of publication and mention of the grant of the patent: **07.06.2023**
(21) Application number: 13828818.8
(22) Date of filing: 11.12.2013
(51) Int. Cl.: F24H 1/18, F24H 1/20, F24H 9/00, F28D 20/00, F24H 1/28

(54) **METHOD AND DEVICE FOR INTERNAL ACCUMULATION AND CIRCULATION OF THERMALLY TREATED FLUID**
VERFAHREN UND VORRICHTUNG FÜR INTERNE ANSAMMLUNG UND ZIRKULATION VON THERMISCH BEHANDELTER FLÜSSIGKEIT
PROCÉDÉ ET DISPOSITIF POUR L'ACCUMULATION ET LA CIRCULATION INTERNES D'UN FLUIDE TRAITÉ THERMIQUEMENT

(30) Priority: 11.12.2012 IT MI20122109; 11.12.2012 IT MI20122106; 11.12.2012 IT MI20122112
(43) Date of publication of application: 11.11.2015
(73) Proprietor: Loddo, Francesco, 08036 Ortueri (IT)
(72) Inventor: Loddo, Francesco, 08036 Ortueri (IT)
(74) Representative: Serravalle, Marco
(86) International application number: PCT/IB2013/060804
(87) International publication number: WO 2014/091421

(56) References cited:
- WO-A1-93/18338
- WO-A1-02/079707
- DE-A1- 19 609 346
- DE-A1-102005 001 511
- FR-A1- 2 370 931

## Description

### Application field of the invention

The present invention refers to the field of the systems for the thermal treatment of the fluids, and more precisely to a method and device for the internal accumulation and circulation of thermally treated fluid.

### Description of the prior art

Different types of devices are known for the accumulation of thermally treated fluid, characterized by different configurations, that can be classified essentially in the vertical-axis or horizontal-axis types, fed by different thermal exchange systems, such as coils, fluid or electric heat exchangers.

Such known configurations, regardless of the volume and of the type of plant where the system is used, involve problems of relevant thermal inertia. The larger is the volume of the accumulation, the slower will be the process to reach the suitable temperature.

Furthermore, in these known devices, a considerable thermal stratification in vertical direction of the fluid they contain is generated, so that the fluid tends to have a much higher temperature in the upper region compared to the one of the lower region of the device itself. The high temperature gradient in vertical direction limits: the possibility of using the fluid; the volume available at the highest temperature set in the system; furthermore recovering the suitable temperature is harder, once it lowered due either to the process consumption or to the natural mixing because of the internal gradient. Furthermore, in the devices known a high internal turbulence develops during the step of thermal accumulation, which slows down the process of reaching the suitable temperature.

WO93/18338-A1 discloses a container for water heating, preferably in an automatic dispenser of beverages.

DE19609346-A1 discloses a cylindrical heat accumulator with two concentric storage chambers with a number of inlet and outlet water conduits in the lateral wall of the external chamber. The conduits are so positioned as to produce a water thrust and suction in a tangential direction, whereby a horizontal rotation of the water occurs around the axis of the container.

WO02079707A1 discloses a system aimed to obtain a faster and more efficient condition of heat exchange / recovery within a boiler, by inserting an annular concentric chamber inside the boiler, and exploiting the stratification of the fluids inside the boiler, obtaining temperatures of the internal fluid very different between the top and the bottom of the boiler, with a marked increase in temperature in the central part.

FR 2 370 931 discloses a process for maintaining and reinforcing, in an accumulator tank, the stratification of the fluid contained in the tank when a flow of the fluid is produced by heating this fluid.

The phenomena described above are particularly relevant in the current types of tanks equipped with a single chamber geometry.

### Summary of the invention

Therefore, the aim of the present invention is to provide a method and a device for the internal accumulation and circulation of thermally treated fluid, adapted to overcome all the aforementioned drawbacks, allowing to improve the efficiency of the heat exchange, regardless of whether the energy is added or removed, and to increase the uniformity of the internal temperature of the device.

The accumulation system of the present invention determines a kinetics of the fluid that remarkably reduces the turbulences, thus the flow resistance, allowing a remarkable improvement of the energy efficiency, consequently making the operation faster, an almost constant temperature throughout the whole available volume, a very slow thermal decay due to the high temperature uniformity obtained by the system, and thus a relevant overall money saving.

This result is obtained by constraining the motion of the fluid to be thermally treated in a chamber having a substantially horizontal or vertical axis, and wherein the thermal exchange engine system is asymmetric with respect to the vertical medial plane (polar). The chamber is divided into two or more parts by means of the internal interposition of one or more plates as separators or bulkheads having a substantially vertical development, creating an internal circulation. This operating technique allows to create a cross rotatory motion of the fluid within the chamber, regardless of the direction of the rotation (clockwise or counter-clockwise) accelerating the process of fluid mixing. The system according to the invention operates regardless of the source that increases or decreases the temperature of the fluid, namely heating or cooling.

An object of the present invention is a device adapted to accumulate the thermally treated fluid according to claim 1. The device comprises :
a containment chamber of said thermally treated fluid, at least one separator arranged with a substantially vertical development in the containment chamber, said at least one separator being a plate adapted to divide said chamber in at least two parts, and to leave openings at the opposite upper and lower end of said chamber, the fluid being able to pass through it in order to determine a rotatory circulation of the fluid in the cross direction in said chamber.

According to the invention, said device further comprises at least one heat exchange element arranged in the containment chamber, in one only of said parts of the chamber A method for using said device is described in claim 9 and is also an object of the present invention.

It is a particular object of the present invention a method and a device for the internal accumulation and circulation of thermally treated fluid, as described in the claims that are an integral part of the present description.

### Brief description of the figures

Further aims and advantages of the present invention will become more apparent from the following detailed description of an embodiment thereof (and of its alternative embodiments) and from the annexed drawings, which are supplied by way of nonlimiting example, wherein:
figures from 1 to 7 show some of the possible alternative shapes of the cross section of the device that is object of the present description, in case of a substantially vertical development;
figures 8 and 9 show further possible alternative shapes of the cross section of the device that is object of the present description, in case of a substantially horizontal development;
figure 10 shows a further alternative embodiment of the device that is object of the present invention, in case of a furnace, in a cross section view;
figures 11 and 12 show trends in time of the temperature in test conditions of a device of the type known in the art and of a device according to the invention, respectively; figure 13 shows a further embodiment of the device, in a cross section view and in a C-C section view;
figures from 14 to 23 show some of the possible further alternative shapes of the cross section of a device that is not object of the present invention;

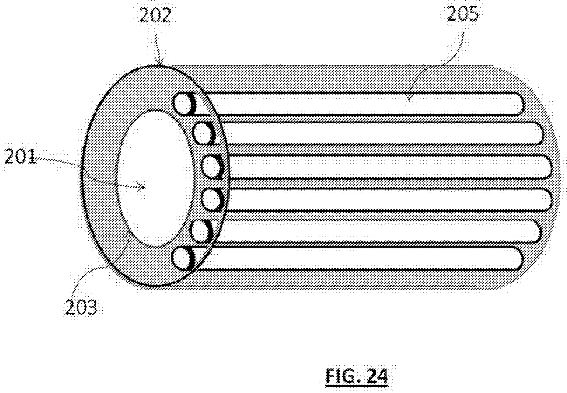

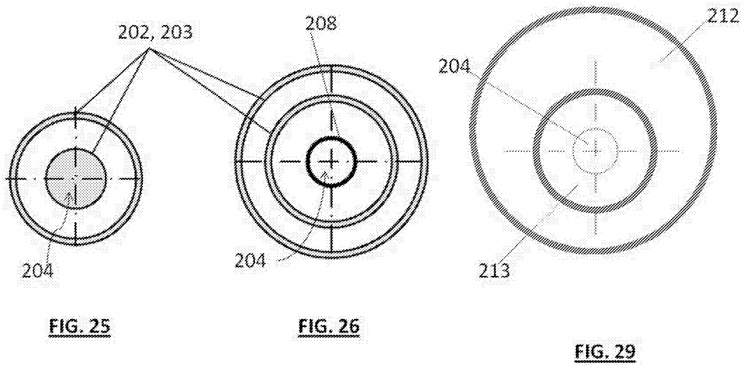

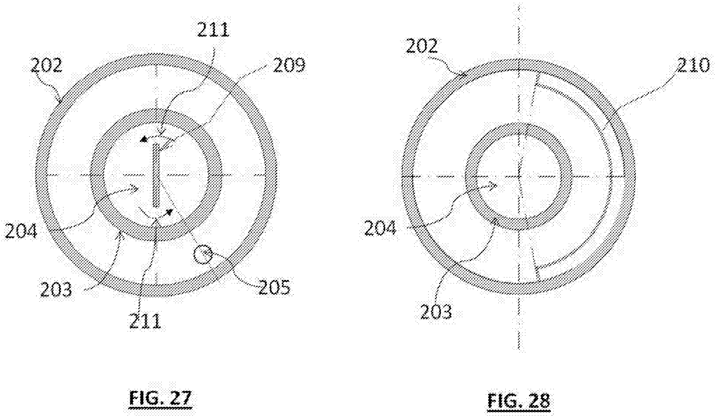

figure 24 shows a lateral axonometric projection of an embodiment of the device not according to the invention;
figures from 25 to 29 show some of the possible further alternative shapes of the cross section of a device that is not object of the present invention;

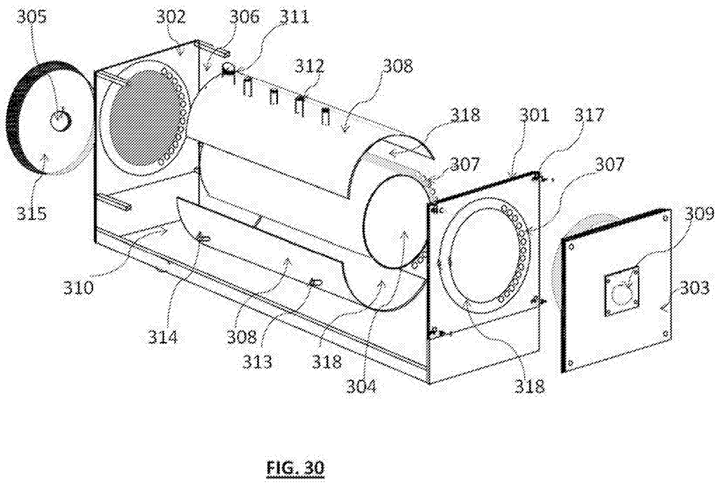

figure 30 shows an exploded, perspective view of a boiler with burner according to further alternative embodiments not in accordance with the present invention;

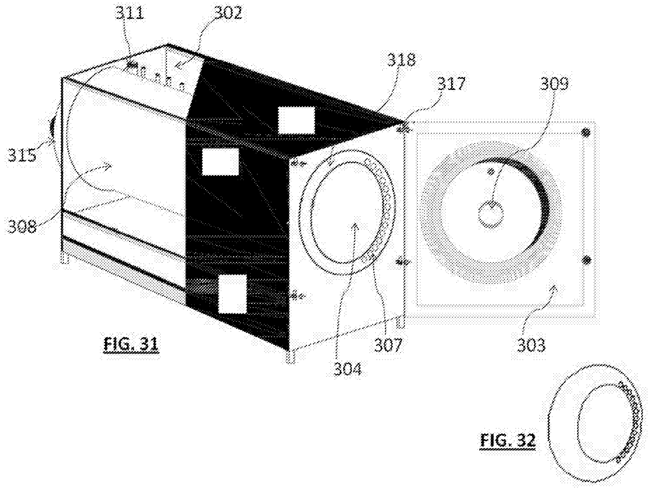

figure 31 shows an assembled, perspective view and a partial internal view of the boiler with burner of figure 30;
figure 32 shows an example of eccentric section of the furnace of the boiler of fig. 30. The same reference numbers and letters in the figures identify the same elements or components.

### Detailed description of embodiments

Figures from 1 to 4 show first embodiments of the device according to the invention which have a substantially cylindrical containment chamber with vertical development 1, equipped with an inlet or outlet duct 2 of the fluid through the lower wall and an inlet or outlet duct of the fluid through the upper wall.

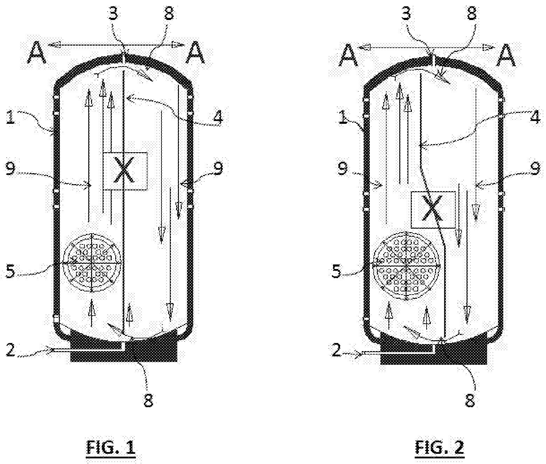

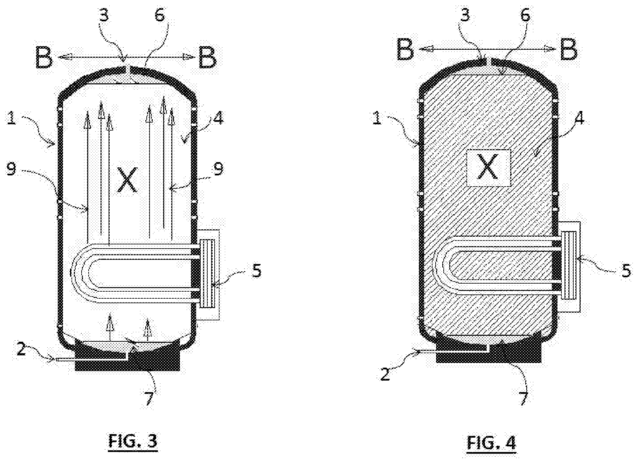

In the chamber, a separator (or bulkhead) 4 is arranged, having a substantially vertical development, in central position, which is connected to the lateral walls of the chamber, but which leaves two openings at the upper (6) and lower (7) opposite ends of the chamber, through which the fluid which fills the chamber can pass. The chamber is shown according to two central section views orthogonal to each other, A-A and B-B respectively, in order to show the separator 4 in a side view (figures 1 and 2) and in a front view (figures 3 and 4).

Furthermore, at least one heat exchange element 5 is present in the chamber, completely arranged on one side of the chamber with respect to the vertical plane of symmetry of the chamber itself. The heat exchange element 5 can be of different shapes and types, which will be described better below, also as a function of the volume of fluid treated and of the temperature that has to be obtained.

By arranging the heat exchange element 5 only on one side of the chamber a cross rotatory motion of the fluid within the chamber is generated (figure 1 and 2), through the two upper and lower openings left by the separator: see arrows 8 indicating the movement of the fluid through the openings and arrows 9 indicating the movement of the fluid in the two opposite directions in the chamber with respect to the separator. This cross circulation accelerates the mixing process of the fluid, generating a substantial temperature uniformity of the fluid itself within the chamber, both during the heat exchange and at the end of it. This effect is obtained for the heat exchange both decreasing and increasing the temperature. The direction of rotation of the fluid depends on the side where the heat exchange element is present and on whether the exchange decreases or increases the temperature, taking into account that the natural circulation of the fluid moves upwards when the temperature is increasing and downwards when the temperature is decreasing. The variation of the temperature value of an accumulation obtained in such a way is very slow, due to the fact that the temperatures are substantially uniform in the whole volume of the chamber.

In case of a heat exchange increasing the temperature, it is preferable that the fluid is introduced through the duct 2 in the lower part, while the fluid outlet is through the duct 3 in the upper part of the chamber, while in case of a heat exchange reducing the temperature the situation is opposite.

The configuration of the chamber, and thus of both its internal and external walls can be cylindrical, as said above, but also other shapes are possible, for example ovoid, polygonal, namely parallelepiped with or without chamfered angles, or also further shapes.

More than one heat exchange element is present, provided that they are on the same side of the chamber with a single separator. The type of heat exchange can be of different nature (electric or thermal fluid or other), while the desired treatment speed is directly connected to the number of heat exchangers and to their specific power (the volume of the fluid to be treated being the same). The power source of the heat exchangers can be of any type. For example, in a biogas plant, the device of the invention prevents the generation of CO₂ .

In the figures from 1 to 4, a heat exchanger 5 of the fluid to fluid type is provided.

Figures from 5 to 7 show other embodiments of the device according to the invention, with a substantially cylindrical containment chamber 1 having vertical development, wherein the heat exchange in the chamber occurs by means of one or more resistors.

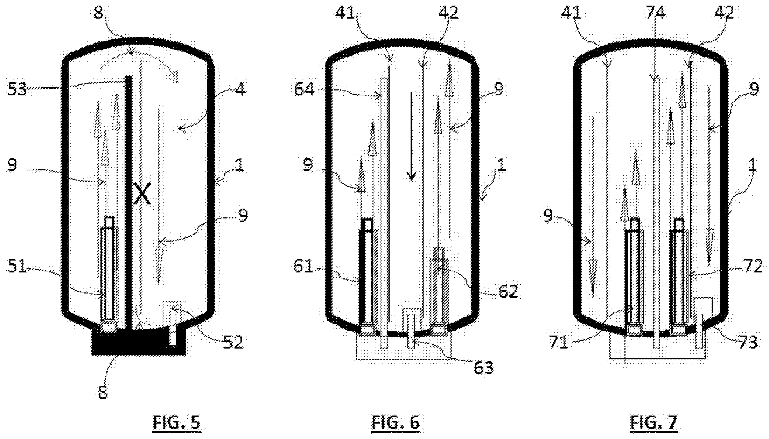

In particular, figure 5 shows a resistor heat exchanger 51, on one side of the chamber, preferably having vertical development, on one side of a separator 4. The chamber is equipped with a first inlet or outlet duct 52 of the fluid through the lower wall and it is also equipped with a second inlet or outlet duct 53 of the fluid through the lower wall, whose fluid intake is inside the chamber in the upper part. This configuration is typical of an electric boiler.

Arrows 8 and 9 show the fluid circulation inside the chamber, as in the embodiments of the previous figures.

Figures 6 and 7 show further alternative embodiments of the same type as of figure 5, but they have two internal parallel separators 41 and 42, which then divide the chamber 1 into three parts. The chamber 1 is always provided with a first inlet or outlet duct, 63 in figure 6 and 73 in figure 7, of the fluid through the lower wall and with a second inlet or outlet duct, 64 in figure 6 and 77 in figure 7, of the fluid through the upper wall, whose fluid intake is inside the chamber in the upper part.

In the alternative embodiment of figure 6, two resistor heat exchangers 61 and 62 are shown, preferably having a vertical development, in the lateral parts of the three parts in which the chamber is divided, while in the alternative embodiment of figure 7 two resistor heat exchangers 71 and 72 are shown, preferably having a vertical development, in the middle part of the three parts in which the chamber is divided. Arrows show the directions of internal circulation of the fluid, that, in these cases, since it is a heat exchange increasing the temperature, moves upwards in the parts of the chamber when the exchangers are present, and downwards in the other parts where there are no exchangers.

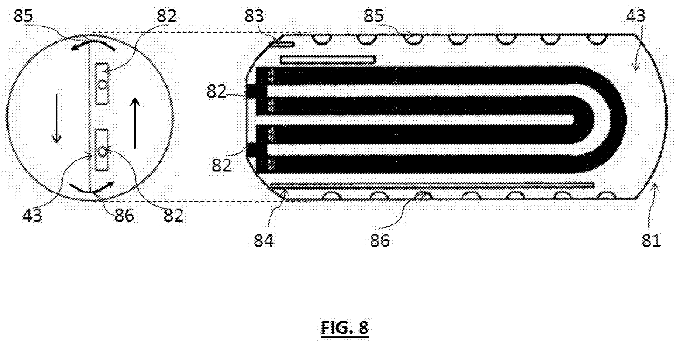

Figure 8 shows a further alternative embodiment of the device of the invention, with a containment chamber having a substantially horizontal and cylindrical development 81, in longitudinal and cross section views, wherein the heat exchange in the chamber takes place by means of a heat exchanger 82, for example of the fluid to fluid type, preferably having a horizontal development.

The exchanger 82 is placed on one side of the chamber, laterally to a separator 43. The chamber is provided with a first inlet or outlet duct 83 of the fluid through a lateral wall and it is also equipped with a second inlet or outlet duct 84 of the fluid through said lateral wall, whose fluid intake is inside the chamber in the opposite part.

The separator 43 is placed centrally in the chamber with a substantially vertical direction, and develops along the medial horizontal direction of the chamber between the two opposite walls, and has two series of slots, on the upper 85 and lower 86 edges, respectively. The slots ensure the passage of the fluid through them, in order to create a cross circulation of the fluid in the chamber, as indicated by the directions of the arrows. In case of a heat exchange increasing the temperature, on the side of the chamber where the exchanger 82 is present the direction of the fluid is from the bottom upwards, in the opposite direction in the other side of the chamber.

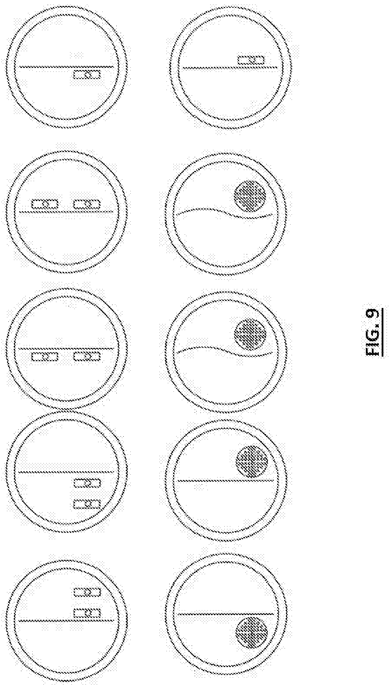

Figure 9 shows different possible shapes of the cross section of a chamber having a horizontal direction, of the same type as the one of figure 8. In each of the shapes, the presence of a separator can be noticed in median position in a substantially vertical direction, having several shapes, not only straight, but also possibly slightly curved, in order to ensure enough space for positioning one or more heat exchangers on one side of the chamber. The presence of the upper and lower slots of the separators in order to guarantee the cross circulation of the fluid in the chamber can be noticed.

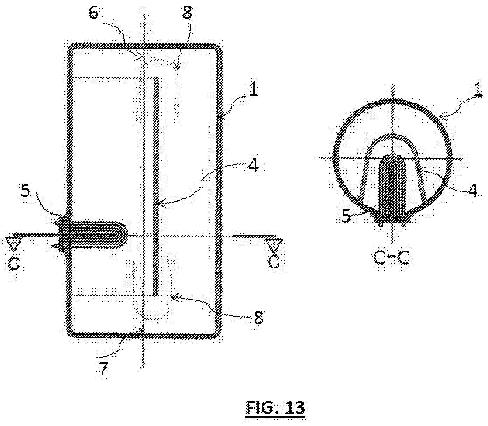

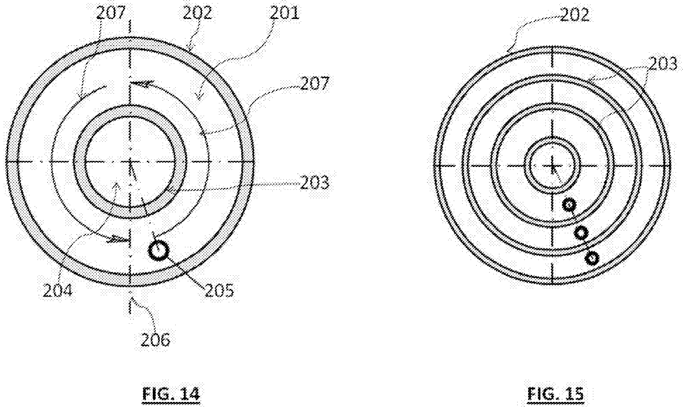

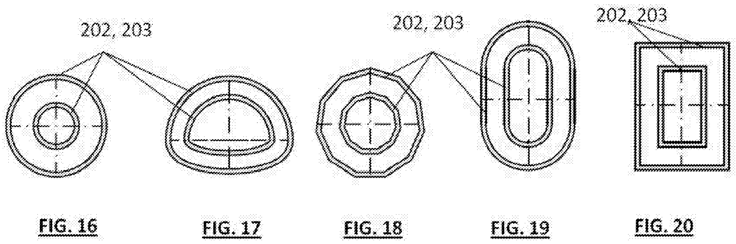

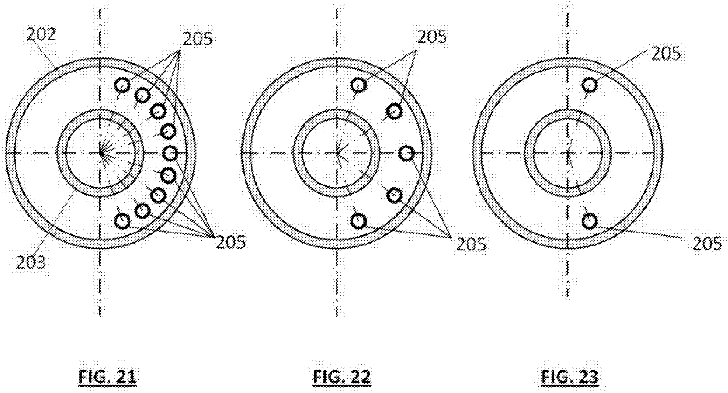

Furthermore, in the different embodiments of the present invention, with the chamber having a substantially vertical or horizontal axis, the separator (or bulkhead) 4 can have an elongated cross section configuration, not always straight, but having also a different shape, for example curved, as shown in figure 13. Here the configuration of the separator 4 is such as to allow the insertion in the chamber 1 of a heat exchanger 5, for example having a horizontal development. It can be seen that the separator 4 is connected to the side walls of the chamber 1, while it leaves two openings at the opposite ends 6, 7 of the chamber, through which the fluid can pass (arrows 8). The separator divides the chamber in two equal or different volumes, one volume housing one or more heat exchangers, also of various type.

In the various embodiments of the present invention, the width of the openings 6, 7 at the ends of the chamber is determined in order to ensure a correct and efficient fluid circulation, also in terms of its speed, and it can also depend on the density of the fluid and on its composition, and it can further depend on the presence of mixing substances therein.

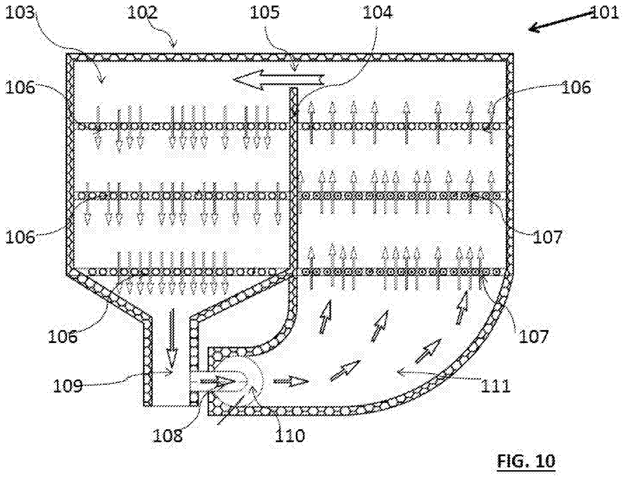

With reference to figure 10, in a further alternative embodiment of the present invention, an example of application with fluid air can be represented by a stove for cooking food or other substances, for example ceramic elements. In any case, a high temperature and a uniformity of the latter are essential factors for the success of the final product.

In figure 10, the stove 101, in a cross section view, has substantially an external wall 102 and an internal chamber 103. In the internal chamber, an internal separator is present 104, having a substantially vertical development, in an intermediate position, such as to divide the internal space of the stove into two parts. In the upper part, the separator leaves an internal opening 105, as in the lower part of the stove (opening 108). In the stove, one or more horizontal grills 106 are present, as a support for the elements to be cooked. In one of the two parts of the chamber delimited by the intermediate separator 104, one or more series of heating elements 107 are present, possibly comprised in the support grills. Grills are openwork to let the air pass through them. The heating elements can be power supplied in various ways, for example electrically. In the area of the bottom opening 108 a fan 110 can be present as a system to force the circulation of the air in order to accelerate the thermal flow. Downstream of the bottom opening 108, a compensation chamber 111 can be present to allow an effective distribution of the air in any operating space of the cooking chambers.

Due to the presence of the separator 104, of the two upper 105 and lower 108 openings, and of the heating elements 107 in a part of the camera, an air circulation within the camera is generated, shown by the arrows in the figure. Since the heat exchange is of the type increasing the temperature, on the side of the chamber where the exchanger 107 is present the direction of the fluid is from the bottom upwards, in the opposite direction in the other side of the chamber.

In the lower part of the stove, a bottom hopper 109 is possibly present, which has the twofold function of air conveyor and accumulator and outlet of dust and working debris which the workflow can determine.

In the various embodiments described above the device that is object of the invention appears as a container closed by opposite walls, which can be inserted in any installation for the thermally treatment of the fluids. It must be equipped with appropriate valves and/or intakes and withdrawal taps of the fluid from the annular chambers, and with connections of the heat exchangers to the respective energy sources. The person skilled in the art is able to realize the installation and its connections by applying the normal technique known in the art.

In the simplest configuration of the installation, the heat exchangers are configured as simple through pipes, for example fixed to the end walls of the annular chambers; their number depends on the speed and on the uniformity of functional heating of the productive cycle.

The exchangers may have linear or non-linear shapes, coils, corrugated or finned fluid heat exchangers supplied by a heat source selected according to their use or their needs, for example, electric, fluid thermal, also with a renewable energy source, for example solar, ecc...

The heat exchangers can be positioned in a fixed or extractable version depending on production and/or maintenance needs.

The thermal vector or type of fluid selected to be inside the exchangers depends on the industrial process wherein the present invention is applied, as well as on its degree of viscosity. The material which the device is made of and/or is covered with is also a function of the chemical aggressiveness of the liquids treated and thus of their dangerousness.

There are no specific limits for the type of fluid to be treated: further constructive differentiations that will be realized will be directly connected to the type of technological process where it will be used.

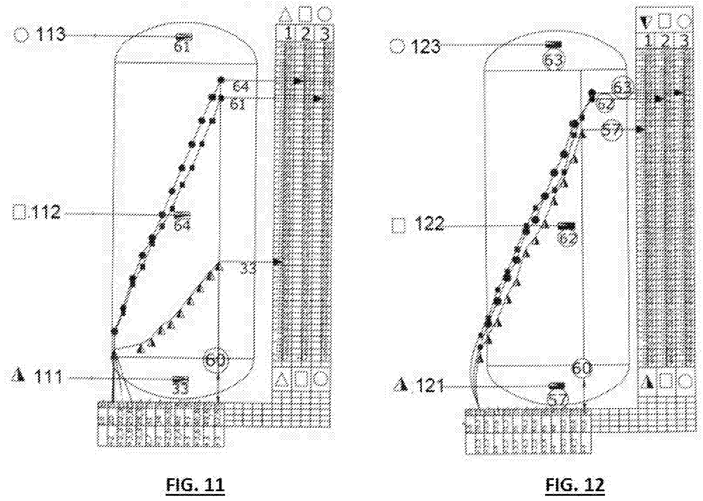

Figure 11 and 12 show diagrams of the temperature increase trend between a device according to the invention (fig. 12) and a device of the type known in the art (fig. 11), in an experiment carried out in equivalent conditions of heating duration (60 min.), quantity of fluid treated, initial temperature of the fluid (about 18°C), external ambient temperature (about 20°C), shape of the vertical container, drawn as a background in the figures.

The temperature is measured by thermal probes in three points of the container, in the upper part (point 113 in fig. 11, point 123 in fig. 12), in the intermediate part (point 112 in fig. 11, point 122 in fig. 12), and in the lower part (point 111 in fig. 11, point 121 in fig. 12), respectively. It can be seen that after 60 min. the temperature on the upper part of the two containers is similar (about 63-64°C) with a linear trend, as well as in the intermediate part (about 61-62°C), while in the device according to the invention, the temperature in the lower part (about 57°C) reaches almost the one in the upper part with a linear trend, while in the device known in the art, the temperature remains at a low value (about 33°C), with a slow increase trend.

It will be apparent to the person skilled in the art that other equivalent embodiments, and their combinations, of the invention can be conceived and reduced to practice without departing from the scope of the invention, which is defined by the appended claims.

The separator is a plate, for example made of metal or of other material, for example teflon, and can comprise an insulation, for a better thermal separation between the parts which the internal chamber is divided in.

The thermal fluid can be of various type, not only water, but also other chemical substances, e.g. wine, grape must, milk, beer, fruit juices, and/or liquids from the chemical or petrochemical industry, or containing animal or vegetal waste, possibly pretreated. Thus the device of the invention can be advantageously used in a system for food production or treatment, for example in the process of making wine or beer.

The effect of cross circulation of the fluid can exist also when the internal heat exchanger is not present. For example in case of non-insulated external walls, it is possible to obtain an effect of internal heating by solar irradiation, and, consequently, by the effect of cross circulation of the fluid.

The advantages deriving from the application of the present invention are evident.

The device allows to obtain a fast and efficient thermal uniformity, both for heating and for cooling, with respect to the traditional accumulation boilers currently used in the different production cycles.

Extremely more efficient results can be obtained both in the heating step and in the settling step of the temperature of the process, by using, in fact, lower peak internal temperatures or anyway for a definitely shorter time than the traditional systems.

Both constant and variable annular sections can be used, depending on the fact that the speed of the operating process to optimize the conditioned volume or the temperature variation is exploited.

The configuration of the annular chamber eliminates turbulence and inertia that makes the process of starting-up temperature of the volume of fluid to be processed very slow. The heating speed and the stratification of the fluid contained in the annular chamber will be connected to the number and to the section of the heat exchangers that will be placed within the system.

The system allows to obtain a remarkable energy saving regardless of the vector fluid and of the liquid that one wants to condition, also due to the possibility of setting lower maximum temperatures than the ones normally used at present, since the system reaches the desired thermal uniformity in a faster way.

Once the energy source stops generating energy for the heat exchange, the cross circulation of the fluid goes on due to thermal convection, ensuring a better thermal uniformity within the annular chamber for a long time.

Preferred embodiments of the invention are described in the dependent claims.

Preferably in the device said containment chamber has a cylindrical configuration, or ovoid, or polygonal, or oval, namely parallelepiped with or without chamfered angles.

Preferably in the device said at least one heat exchange element comprises more parallel longitudinal heat exchangers, with equal or different diameters, in fixed or extractable version.

Preferably in the device said at least one heat exchange element comprises one or more linear or non-linear heat exchangers, or coils, or corrugated or finned heat exchangers, or at least a partially hollow space.

## Claims

1. Device adapted to accumulate a thermally treated fluid, wherein the device comprises:
- a containment chamber of said thermally treated fluid (1);
- at least one separator (4), wherein said separator is a plate arranged with a substantially vertical development in the containment chamber, and connected to the lateral walls of the chamber, said at least one separator being adapted to divide said chamber in at least two parts, and to leave openings at the opposite upper (6) and lower (7) end of said chamber, through which openings the fluid can pass in order to determine a rotatory circulation of the fluid in the cross direction in said chamber;
- at least one heat exchange element (5) arranged in the containment chamber, in one only of said at least two parts of the chamber.

2. Device as in claim 1, wherein at least one of said parts of the chamber is without heat exchange elements.

3. Device as in claim 1, wherein said containment chamber has a cylindrical configuration, or ovoid, or polygonal, or oval, or parallelepiped with or without chamfered angles, developed in a substantially horizontal or vertical direction.

4. Device as in claim 1 , wherein said at least one heat exchange element (5) comprises more parallel longitudinal heat exchangers, with equal or different diameters, in fixed or extractable version.

5. Device as in claim 1, wherein said at least one heat exchange element (5) comprises one or more linear or non-linear heat exchangers, or coils, or corrugated or finned heat exchangers, or at least a partially hollow space (210).

6. Device as in claim 1, wherein said separator (4) comprises an insulation, for a better thermal separation between the parts into which the internal chamber is divided.

7. Device as in claim 1, wherein said separator (4) has a straight or curved cross section.

8. Device as in claim 2, wherein said chamber is a furnace, and said at least one heat exchange element is one or more series of heating elements (107).

9. Method for accumulating thermally treated fluid, wherein the method comprises the steps of:
- providing a device according to any one of the preceding claims;
- introducing a fluid to be treated thermally in said device, in order to obtain a cross rotatory motion of said fluid within said device.

## Patentansprüche

1. Vorrichtung zum Akkumulieren eines thermisch behandelten Fluids, wobei die Vorrichtung umfasst:
- eine Aufnahmekammer für die thermisch behandelte Flüssigkeit (1);
- zumindest einen Separator (4), wobei der Separator eine Platte ist, die mit einer im Wesentlichen vertikalen Ausdehnung in der Aufnahmekammer angeordnet ist und mit den Seitenwänden der Kammer verbunden ist, wobei der mindestens eine Separator derart eingerichtet ist, dass er die Kammer in mindestens zwei Teile zu unterteilen und Öffnungen an dem gegenüberliegenden oberen (6) und unteren (7) Ende der Kammer zu frei lassen vermag, wobei das Fluid durch die Öffnungen hindurchzutreten vermag, um eine Rotationszirkulation des Fluids in der Kammer in Querrichtung zu bewirken;
- zumindest ein Wärmetauscherelement (5), das in der Aufnahmekammer angeordnet ist, und zwar in nur einem der mindestens zwei Teile der Kammer.

2. Vorrichtung nach Anspruch 1, wobei in mindestens einem der Teile der Kammer kein Wärmetauscherelement vorgesehen ist.

3. Vorrichtung nach Anspruch 1, wobei die Aufnahmekammer derart ausgebildet ist, dass sie zylindrisch, eiförmig, mehreckig, oval oder quaderförmig ist, mit oder ohne abgeschrägte Winkel, die sich in einer im Wesentlichen horizontalen oder vertikalen Richtung erstrecken.

4. Vorrichtung nach Anspruch 1, wobei das mindestens eine Wärmetauscherelement (5) mehrere parallele Längswärmetauscher mit gleichen oder unterschiedlichen Durchmessern in fester oder längenveränderlicher Ausbildung umfasst.

5. Vorrichtung nach Anspruch 1, wobei das mindestens eine Wärmetauscherelement (5) einen oder mehrere lineare oder nichtlineare Wärmetauscher oder Schlangen oder gewellte oder gerippte Wärmetauscher oder mindestens einen teilweisen Hohlraum (210) aufweist.

6. Vorrichtung nach Anspruch 1, wobei der Separator (4) eine Isolierung aufweist, um eine bessere thermische Trennung zwischen den Teilen, in die der Innenraum unterteilt ist, zu erzielen.

7. Vorrichtung nach Anspruch 1, wobei der Separator (4) einen geraden oder gekrümmten Querschnitt aufweist.

8. Vorrichtung nach Anspruch 2, wobei die Kammer ein Ofen ist und das mindestens eine Wärmeaustauschelement eine oder mehrere Reihen von Heizelementen (107) ist.

9. Verfahren zum Akkumulieren von thermisch behandeltem Fluid, wobei das Verfahren die folgenden Schritte umfasst:
- Bereitstellen einer Vorrichtung nach einem der vorhergehenden Ansprüche;
- Einleiten eines thermisch zu behandelnden Fluids in die Vorrichtung, um eine Querrotationsbewegung des Fluids in der Vorrichtung zu erzeugen.

## Revendications

1. Dispositif adapté pour l'accumulation d'un fluide traité thermiquement, dans lequel le dispositif comprend :
- une chambre de confinement dudit fluide traité thermiquement (1) ;
- au moins un séparateur (4), ledit séparateur étant une plaque agencée avec un développement sensiblement vertical dans la chambre de confinement, et reliée aux parois latérales de la chambre, ledit au moins un séparateur étant adapté pour diviser ladite chambre en au moins deux parties, et pour laisser des ouvertures aux extrémités supérieure (6) et inférieure (7) opposées de ladite chambre, ouvertures à travers lesquelles le fluide peut passer afin de déterminer une circulation rotative du fluide dans le sens transversal dans ladite chambre ;
- au moins un élément d'échange de chaleur (5) agencé dans la chambre de confinement, dans une seule desdites au moins deux parties de la chambre.

2. Dispositif selon la revendication 1, dans lequel au moins une desdites parties de la chambre est dépourvue d'éléments d'échange de chaleur.

3. Dispositif selon la revendication 1, dans lequel ladite chambre de confinement a une configuration cylindrique, ou ovoïde, ou polygonale, ou ovale, ou parallélépipédique avec ou sans angles chanfreinés, développée dans une direction sensiblement horizontale ou verticale.

4. Dispositif selon la revendication 1, dans lequel ledit au moins un élément d'échange de chaleur (5) comprend plusieurs échangeurs de chaleur longitudinaux parallèles, avec des diamètres égaux ou différents, en version fixe ou extractible.

5. Dispositif selon la revendication 1, dans lequel ledit au moins un élément d'échange de chaleur (5) comprend un ou plusieurs échangeurs de chaleur linéaires ou non linéaires, ou serpentins, ou échangeurs de chaleur ondulés ou à ailettes, ou au moins un espace partiellement creux (210).

6. Dispositif selon la revendication 1, dans lequel ledit séparateur (4) comprend une isolation, pour une meilleure séparation thermique entre les parties constituant la chambre interne.

7. Dispositif selon la revendication 1, dans lequel ledit séparateur (4) a une section transversale droite ou incurvée.

8. Dispositif selon la revendication 2, dans lequel ladite chambre est un four, et ledit au moins un élément d'échange de chaleur est une ou plusieurs séries d'éléments chauffants (107).

9. Procédé pour accumuler un fluide traité thermiquement, dans lequel le procédé comprend les étapes consistant à :
- fournir un dispositif selon l'une quelconque des revendications précédentes ;
- introduire un fluide à traiter thermiquement dans ledit dispositif, afin d'obtenir un mouvement de rotation transversal dudit fluide à l'intérieur dudit dispositif.
